(19) Europäisches Patentamt / European Patent Office / Office européen des brevets

(11) **EP 4 354 702 B1**

(12) **EUROPEAN PATENT SPECIFICATION**

(45) Date of publication and mention
of the grant of the patent:
**05.11.2025  Bulletin 2025/45**

(21) Application number: **22842277.0**

(22) Date of filing: **30.05.2022**

(51) International Patent Classification (IPC):
*H02J 50/40* (2016.01)    *H02J 50/00* (2016.01)
*H02J 50/12* (2016.01)    *H02J 50/70* (2016.01)
*H01F 38/14* (2006.01)    *H01F 27/36* (2006.01)

(52) Cooperative Patent Classification (CPC):
**H01F 38/14; H01F 27/006; H01F 27/2804;**
**H02J 50/005; H02J 50/12; H02J 50/40;**
H01F 27/366; H01F 27/40; H01F 2027/2809;
H02J 50/70

(86) International application number:
**PCT/KR2022/007624**

(87) International publication number:
**WO 2023/287014 (19.01.2023 Gazette 2023/03)**

(54) **ELECTRONIC APPARATUS COMPRISING TRANSMISSION COIL FOR PROVIDING WIRELESS POWER TO RECEPTION COILS**

ELEKTRONISCHE VORRICHTUNG MIT SENDESPULE ZUR BEREITSTELLUNG VON DRAHTLOSLEISTUNG AN EMPFANGSSPULEN

APPAREIL ÉLECTRONIQUE COMPRENANT UNE BOBINE DE TRANSMISSION POUR FOURNIR DE L'ÉNERGIE SANS FIL À DES BOBINES DE RÉCEPTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **16.07.2021   KR 20210093344**

(43) Date of publication of application:
**17.04.2024   Bulletin 2024/16**

(73) Proprietors:
• **Samsung Electronics Co., Ltd.**
  **Suwon-si, Gyeonggi-do 16677 (KR)**
• **Hongik University Industry-Academia Cooperation Foundation**
  **Mapo-gu, Seoul 04066 (KR)**

(72) Inventors:
• **JEONG, Seogyong**
  **Suwon-si, Gyeonggi-do 16677 (KR)**
• **LEE, Jeonghae**
  **Seoul 04066 (KR)**
• **CHOI, Bohee**
  **Seoul 04066 (KR)**
• **PARK, Junhyeong**
  **Suwon-si, Gyeonggi-do 16677 (KR)**
• **RYU, Youngho**
  **Suwon-si, Gyeonggi-do 16677 (KR)**
• **CHOI, Byeongguk**
  **Suwon-si, Gyeonggi-do 16677 (KR)**
• **HAN, Jungkyu**
  **Suwon-si, Gyeonggi-do 16677 (KR)**

(74) Representative: **Appleyard Lees IP LLP**
**15 Clare Road**
**Halifax HX1 2HY (GB)**

(56) References cited:
KR-A- 20140 066 068      KR-A- 20200 082 040
KR-B1- 102 046 843       KR-B1- 102 213 633
US-A1- 2019 074 135      US-A1- 2021 012 959

**Description**

[Technical Field]

Various embodiments of the disclosure relate to an electronic device including a transmission coil for providing wireless power to reception coils.

[Background Art]

Wireless power transfer (WPT) is a technology of allowing a transmitter to transmit power to a receiver (or to charge the receiver) without wires, which may increase user convenience and be useful in an environment where it is difficult to supply wired power. WPT schemes include, for example, an electromagnetic induction (or induction) scheme using coils, a resonance scheme using resonance, and a radio frequency (RF)/microwave radiation scheme in which electrical energy is converted into microwaves and transmitted.

The principle of WPT is that a magnetic field is generated in a first coil of a transmitting end, and current induced or resonated in a second coil of a receiving end according to a change in the generated magnetic field generates energy at the receiving end.

The induction scheme requires close proximity and accurate alignment between the first coil of the transmitting end and the second coil of the receiving end, while the resonance scheme has the advantage that wireless power transmission is possible even if the first and second coils are relatively far apart or not accurately aligned. The resonance scheme is also advantageous in that wireless power may be transmitted to multiple receivers. In the resonance scheme, not only has single input and single output (SISO) WPT, in which a single transmitter transmits wireless power to a single receiver, been proposed, but also single input and multiple output (SIMO) WPT, in which a single transmitter transmits wireless power to multiple receivers, and multiple input and multiple output (MIMO) WPT, in which multiple transmitters transmit wireless power to multiple receivers.

US 2019/0074135 A1 discloses a wireless power transfer pad with a pyramid shaped ferrite chimney. The WPT pad includes a winding comprising a conductor where the conductor is wound in a planar configuration.

[Detailed Description of the Invention]

[Technical Problem]

With the above-described SIMO WPT, it is possible to simultaneously charge multiple receivers (e.g., reception resonators) with one transmitter (e.g., transmission resonator), and the positional degree of freedom of one receiver with respect to one transmitter may be increased.

When a single transmitter transmits wireless power to multiple receivers, the receivers may have unequal performance (e.g., efficiency) due to different placement of each receiver relative to the transmitter (e.g., structural asymmetry). When multiple transmitters transmit wireless power to multiple receivers (e.g., in the case of MIMO WPT), the receivers may also have unequal performance due to different placement of each receiver relative to each transmitter.

According to an embodiment as defined in the appended claims, an electronic device may be provided, which includes reception coils and a transmission coil having a shape similar to the shape of each of the reception coils.

According to an embodiment as defined in the appended claims, an electronic device may be provided, which includes a transmission coil having narrow portions connecting adjacent conductors.

According to an embodiment as defined in the appended claims, an electronic device may be provided, which includes transmission coils connected in parallel to each other and stacked.

[Technical Solution]

According to an embodiment, an electronic device is provided, as set out in accompanying claim 1.

[Advantageous Effects]

According to an embodiment in accordance with the appended claims, an electronic device may transmit wireless power by using a transmission coil having a shape similar to the shape of reception coils, resulting in uniform performance at receivers of the wireless power.

According to an embodiment in accordance with the appended claims, an electronic device may transmit wireless power by using a transmission coil having a narrow portion connecting adjacent conductors, thereby reducing the effects of a leakage magnetic field on circuit elements disposed around the transmission coil.

According to an embodiment in accordance with the appended claims, power may be transmitted wirelessly by using transmission coils (e.g., resonators) connected in parallel to each other and stacked, thereby increasing the efficiency of wireless power transmission through the transmission coils.

Various effects of the disclosure are not limited to the effects described above.

[Brief Description of Drawings]

FIG. 1 is a block diagram illustrating an electronic device according to an embodiment.

FIG. 2A is a block diagram illustrating a single input and multiple output (SIMO) wireless power transmission system according to an embodiment.

FIG. 2B is an equivalent circuit diagram illustrating a SIMO wireless power transmission system according to an embodiment.

FIG. 3 is an exploded perspective view illustrating an exemplary electronic device according to an embodiment.

FIG. 4A is a diagram illustrating an example of the shapes and arrangement of a transmission coil and reception coils according to an embodiment.

FIG. 4B is a diagram illustrating another example of the shapes and arrangement of a transmission coil and reception coils according to an embodiment.

FIG. 5 is a diagram illustrating a case in which a transmission coil of an electronic device includes transmission coils connected in parallel to each other according to an embodiment.

FIG. 6 is a diagram illustrating a case in which each reception coil of an electronic device includes reception coils connected in parallel to each other according to an embodiment.

FIG. 7 is a graph illustrating simulation results referred to for describing wireless power transmission efficiency according to an embodiment.

[Mode for Carrying out the Invention]

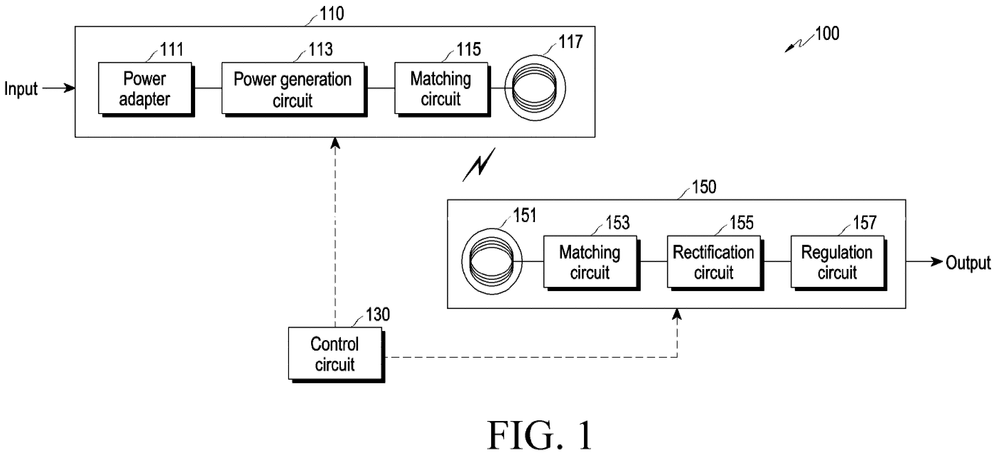

FIG. 1 is a block diagram illustrating an electronic device 100 according to an embodiment.

According to an embodiment in accordance with the appended claims, the electronic device 100 (e.g., a wireless power transmission (or transfer) device) may include a power transmission circuit 110, a control circuit 130, and/or a power reception circuit 150. While the electronic device 100 is shown in the drawing as including one power reception circuit 150, for ease of description, the electronic device 100 may include a plurality of power reception circuits 150, which will be described in greater detail with reference to the following drawings.

According to an embodiment in accordance with the appended claims, the power transmission circuit 110, the control circuit 130, and the power reception circuit 150 may be mounted in a housing (not shown) of the electronic device 100. According to an embodiment, the control circuit 130 may be included in an external electronic device (not shown) connected to the electronic device 100. In this case, the control circuit 130 may input a control signal to at least one component (e.g., the power transmission circuit 110 and/or the power reception circuit 150) of the electronic device 100, and at least one component (e.g., the power transmission circuit 110 and/or the power reception circuit 150) of the electronic device 100 may be controlled by the control circuit 130 included in an external electronic device (not shown). Depending on implementation, the electronic device 100 may not include the control circuit 130 for controlling the power transmission circuit 110 and/or the power reception circuit 150, or the control circuit 130 of the electronic device 100 may not control the power transmission circuit 110 and/or the power reception circuit 150.

According to an embodiment in accordance with the appended claims, the electronic device 100 may provide power to the power reception circuit 150 through the power transmission circuit 110. For example, the electronic device 100 may transmit power wirelessly according to a resonance scheme. More specifically, when a current (e.g., an alternating current (AC) current) flows in a transmission coil 117 (e.g., a transmission resonator), an induced magnetic field (e.g., a Tx field) may be generated from the transmission coil 117. Based on the generated induced magnetic field (e.g., based on the magnitude of the generated induced magnetic field changing over time), induced electromotive force may be generated in a reception coil 151 (e.g., a reception resonator), and a current (e.g., an AC current) may be output from the reception coil 151. In this manner, power may be wirelessly transmitted from the power transmission circuit 110 to the power reception circuit 150. In describing an embodiment of the disclosure, a process of generating an induced magnetic field through the transmission coil 117 in the electronic device 100 may be expressed as outputting wireless power in the electronic device 100 (or the power transmission circuit 110). A process of generating induced electromotive force in the reception coil 151 and/or outputting a current from the reception coil 151 based on the generated induced magnetic field may be expressed as receiving wireless power in the electronic device 100 (or the power reception circuit 150). It may be said that the electronic device 100 (or the power transmission circuit 110) wirelessly transmits power to the power reception circuit 150 and/or to a hardware component (or an external electronic device) connected to the power reception circuit 150 through the above process. According to an embodiment, the electronic device 100 may be implemented in, but not limited to, a manner defined by, for example, the Alliance for Wireless Power (A4WP) standard (or the Air Fuel Alliance (AFA) standard). The electronic device 100 may be implemented independently of the standard.

According to an embodiment in accordance with the appended claims, the power transmission circuit 110 may include a power adapter 111, a power generation circuit 113, a matching circuit 115, and/or the transmission coil 117. According to an embodiment, at least one of the components included in the power transmission circuit 110 may be included in an external electronic device (not shown) connected to the electronic device 100. For example, the illustrated power adapter 111, power generation circuit 113, and/or matching circuit 115 may be included in the external electronic device (not shown), and when a signal and/or power output from the power adapter 111, the power generation circuit 113, and/or the matching circuit 115 is provided to another component of the power transmission circuit 110, power may be wirelessly transmitted from the power transmission circuit 110 to the power reception circuit 150 based on the provided signal and/or power.

According to an embodiment in accordance with the appended claims, the power transmission circuit 110 may wirelessly transmit power to the power reception circuit 150 through the transmission coil 117. According to an embodiment, the power transmission circuit 110 may receive power from the outside in the form of a direct current (DC) or an AC waveform and supply the received power to the power reception circuit 150 in the form of an AC waveform. According to an embodiment, the transmission coil 117 may be magnetically coupled to the reception coil 151, which is described later.

According to an embodiment in accordance with the appended claims, the power adapter 111 may receive AC or DC power from the outside or receive a power signal from a battery device and output DC power having a set voltage value. According to an embodiment, the voltage value of the DC power output from the power adapter 111 may be controlled by the control circuit 130. According to an embodiment, the DC power output from the power adapter 111 may be output to the power generation circuit 113.

According to an embodiment in accordance with the appended claims, the power generation circuit 113 may convert the DC current output from the power adapter 111 to an AC current and output the AC current. According to an embodiment, the power generation circuit 113 may include a predetermined amplifier (e.g., a power amplifier (PA)) (not shown). When the DC current received from the power adapter 111 has a gain less than a set gain, the power generation circuit 113 may amplify the DC current to the set gain. According to an embodiment, the power generation circuit 113 may include a circuit for converting a DC current received from the power adapter 111 into an AC current based on a control signal received from the control circuit 130. For example, the power generation circuit 113 may convert a DC current received from the power adapter 111 to an AC current through a predetermined inverter (not shown). In another example, the power generation circuit 113 may include a gate drive device (not shown). The gate drive device (not shown) may convert a DC current output from the power adapter 111 into an AC current by controlling an on/off state of at least one switching element. In another example, the power generation circuit 113 may generate an AC power signal through a wireless power generator (e.g., an oscillator).

According to an embodiment in accordance with the appended claims, the matching circuit 115 may provide impedance matching. For example, when the AC current output from the power generation circuit 113 is transmitted to the transmission coil 117, the transmitted AC current may generate an induced magnetic field in the transmission coil 117. When impedance of the matching circuit 115 is adjusted, a frequency band of the generated induced magnetic field may be adjusted. According to an embodiment, power transmitted to the power reception circuit 150 (e.g., the reception coil 151) through the transmission coil 117 may be controlled with high efficiency or high power output by the impedance adjustment of the matching circuit 115. According to an embodiment, the matching circuit 115 may adjust impedance under the control of the control circuit 130. For example, the matching circuit 115 may include at least one inductor, at least one capacitor, and/or a switching element. The control circuit 130 may control a connected state of the at least one inductor and/or the at least one capacitor of the matching circuit 115 by controlling an on/off state of the switching element of the matching circuit 115, thereby providing impedance matching through the matching circuit 115. Alternatively, the matching circuit 115 may be implemented not to include a switch. For example, when the positions of the power transmission circuit 110 and the power reception circuit 150 are fixed, and/or when a charging environment is fixed, an element for matching may be optimized, and the matching circuit 115 may be implemented not to include a switch. According to an embodiment, the matching circuit 115 may include at least one capacitor connected in series to the transmission coil 117. The at least one capacitor connected in series to the transmission coil 117 may be configured to have a capacitance value that offsets an imaginary term value of impedance facing the transmission coil 117 (e.g., input impedance $Z_{in}$ described later).

According to an embodiment in accordance with the appended claims, the control circuit 130 may perform and/or control the overall operations of the electronic device 100. For example, the control circuit 130 may perform a specified operation of the electronic device 100 or control another hardware component (e.g., the power transmission circuit 110 and/or the power reception circuit 150) to perform a specified operation.

According to an embodiment in accordance with the appended claims, when the transmission coil 117 receives an AC current from the power generation circuit 113, an induced magnetic field may be generated in the transmission coil 117 (e.g., around the transmission coil 117). According to an embodiment, at least one capacitor may be connected in series or in parallel to the transmission coil 117. According to an embodiment, the transmission coil 117 and the connected at least one capacitor may form a transmission resonator having a specified resonant frequency.

According to an embodiment in accordance with the appended claims, the power reception circuit 150 may include a reception coil 151, a matching circuit 153, a rectification circuit 155, and/or a regulation circuit 157. According to an embodiment, at least one of the components included in the power reception circuit 150 may be included in an external electronic device (not shown) connected to the electronic device 100. For example, the illustrated matching circuit 153, rectification circuit 155, and/or regulation circuit 157 may be included in an external electronic device (not shown), and when a signal and/or power output from another component of the power reception circuit 150 is provided to the matching circuit 153, the rectification circuit 155, and/or the regulation circuit 157, power reception from the power transmission circuit 110 and/or power transmission from the power reception circuit 150 to another hardware component (or, an external electronic device) may be performed based on the provided signal and/or power.

According to an embodiment in accordance with the appended claims, the power reception circuit 150 may receive power wirelessly from the power transmission circuit 110 through the reception coil 151. According to an embodiment, the power reception circuit 150 may receive wireless power through the reception coil 151 in the form of electromagnetic waves generated in response to current/voltage applied to the transmission coil 117 of the power transmission circuit 110. For example, the power reception circuit 150 may receive power by using the transmission coil 117 of the power transmission circuit 110 and induced electromotive force formed in the reception coil 151 of the power reception circuit 150.

According to an embodiment in accordance with the appended claims, an induced electromotive force may be generated in the reception coil 151 and an AC current may be output from the reception coil 151, based on an induced magnetic field generated from the transmission coil 117 (e.g., around the transmission coil 117). According to an embodiment, the reception coil 151 may be connected in series or in parallel to at least one capacitor. According to an embodiment, the reception coil 151 and the connected at least one capacitor may form a reception resonator having a specified resonant frequency, and the resonant frequency of the reception resonator may be set to correspond to (or match) the resonant frequency of the transmission resonator described above.

According to an embodiment in accordance with the appended claims, the matching circuit 153 may provide impedance matching. For example, power transmitted through the transmission coil 117 of the power transmission circuit 110 may be transmitted to the reception coil 151, thereby forming an electromagnetic field. When impedance of the matching circuit 153 is adjusted, a frequency band of the formed electromagnetic field (e.g., an electromagnetic field signal) may be adjusted. According to an embodiment, power received from the power transmission circuit 110 through the reception coil 151 may be controlled with high efficiency or high output by the impedance adjustment of the matching circuit 153. According to an embodiment, the impedance of the matching circuit 153 may be adjusted under the control of the control circuit 130. For example, the matching circuit 153 may include at least one inductor, at least one capacitor, and/or a switching element. The control circuit 130 may control a connected state of the at least one inductor and/or the at least one capacitor of the matching circuit 153 by controlling an on/off state of the switching element of the matching circuit 153, thereby providing impedance matching through the matching circuit 153. According to an embodiment, the matching circuit 153 may include at least one capacitor connected in series to the reception coil 151. The at least one capacitor connected in series to the reception coil 151 may be configured to have a capacitance value that offsets an imaginary term value of the impedance facing the reception coil 151.

According to an embodiment in accordance with the appended claims, the rectification circuit 155 may rectify an AC current output from the reception coil 151 to a DC current and be implemented, for example, in the form of a bridge diode.

According to an embodiment in accordance with the appended claims, the regulation circuit 157 may convert rectified power to a set gain. According to an embodiment, the regulation circuit 157 may include a DC/DC converter (not shown). For example, the regulation circuit 157 may convert the rectified power such that a voltage at its output is 5V. Alternatively, an available minimum or maximum voltage value may be set at a front end of the regulation circuit 157.

According to an embodiment in accordance with the appended claims, power output from the regulation circuit 157 may be transmitted to the outside of the power reception circuit 150. For example, the power output from the power reception circuit 150 may be provided to a hardware component of the electronic device 100 connected to the power reception circuit 150 or to an external electronic device (not shown) connected to the power reception circuit 150. For example, when the electronic device 100 includes a display panel, or when the electronic device 100 is connected to an external electronic device including a display panel, the power reception circuit 150 may provide power received from the power transmission circuit 110 to the display panel.

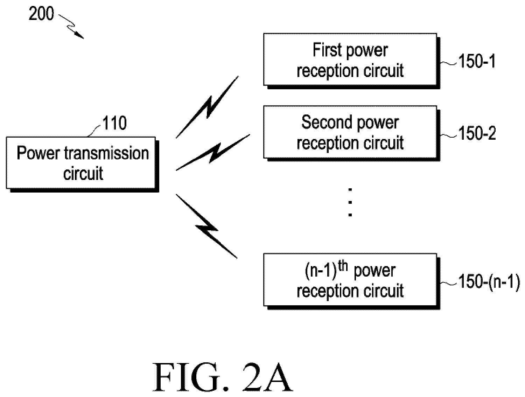

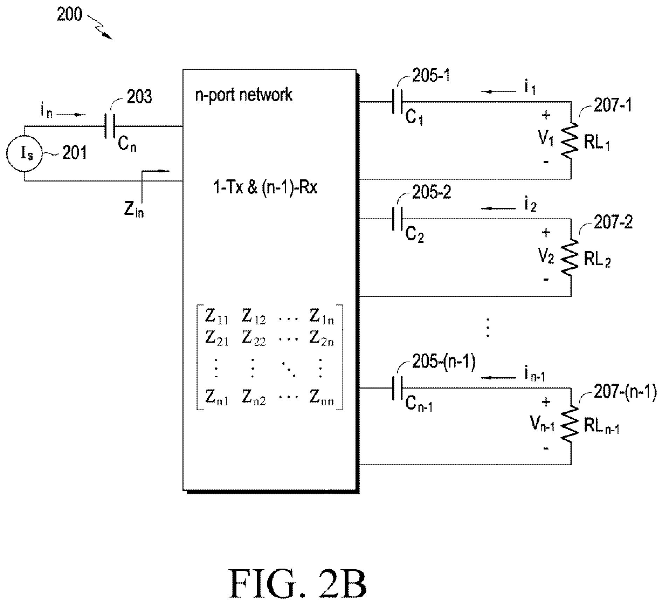

FIG. 2A is a block diagram illustrating a single input and multiple output (SIMO) wireless power transmission system 200 according to an embodiment. FIG. 2B is an equivalent circuit diagram illustrating the SIMO wireless power transmission system 200 according to an embodiment.

Referring to FIG. 2A, according to an embodiment, the SIMO wireless power transmission system 200 may include the power transmission circuit 110 and a plurality of (e.g., (n-1)) power reception circuits (e.g., power reception circuits 150 of FIG. 1). According to an embodiment, the power transmission circuit 110 may transmit power to a first power reception circuit 150-1, a second power reception circuit 150-2, ..., an $(n-1)^{th}$ power reception circuit 150-(n-1).

Referring to FIG. 2B, a current source $I_s$ 201 represents a current source output from the power generation circuit 113 (e.g., a PA) of FIG. 1. Current $I_n$ at a transmitting end represents current output from the power generation circuit 113 (e.g., PA). A capacitor $C_n$ 203 at the transmitting end represents the matching circuit 115 of FIG. 1 (e.g., a capacitor connected in series to the transmission coil 117 of FIG. 1). Input impedance $Z_{in}$ of the transmitting end represents input impedance facing the transmission coil 117 of FIG. 1. Capacitors $C_1, C_2, ..., C_{n-1}$ 205-1, 205-2, ..., 205-(n-1) of a receiving end represent matching circuits of the plurality of power reception circuits 150-1, 150-2, ..., 150-(n-1) (e.g., capacitors connected in series to the reception coils 151 of FIG. 1), respectively. Loads $RL_1, RL_2, ..., RL_{n-1}$ of the receiving end represent rectification circuits (e.g., rectification circuits 155 of FIG. 1) of the plurality of power reception circuits 150-1, 150-2, ..., 150-(n-1), respectively, and the magnitudes of the loads $RL_1, RL_2, ..., RL_{n-1}$ represent input impedances facing the rectification circuits 155, respectively. Currents $I_1, I_2, ..., I_{n-1}$ at the receiving end represent currents transmitted to the loads $RL_1, RL_2, ..., RL_{n-1}$, respectively. Voltages $V_1, V_2, ..., V_{n-1}$ at the receiving end represent voltages applied (i.e., input) to the loads $RL_1, RL_2, ..., RL_{n-1}$, respectively.

According to an embodiment in accordance with the appended claims, a network (e.g., an n-port network) between the single power transmission circuit 110 and the (n-1) power reception circuits 150-1, 150-2, ..., 150-(n-1) may be represented as an nxn Z-parameter matrix, as illustrated.

According to an embodiment in accordance with the appended claims, the equivalent circuit illustrated in FIG. 2B may be expressed as Equation 1.

[Equation 1]

$$
\begin{bmatrix}
-(R_{L1}+\dfrac{1}{jwC_1})i_1 \\
-(R_{L2}+\dfrac{1}{jwC_2})i_2 \\
\vdots \\
-(R_{L(n-1)}+\dfrac{1}{jwC_{n-1}})i_{n-1} \\
(Z_{in}-\dfrac{1}{jwC_n})i_n
\end{bmatrix}
=
\begin{bmatrix}
Z_{11} & Z_{12} & \dots & Z_{1n} \\
Z_{21} & Z_{22} & \dots & Z_{2n} \\
\vdots & \vdots & \ddots & \vdots \\
Z_{n1} & Z_{n2} & \dots & Z_{nn}
\end{bmatrix}
\begin{bmatrix}
i_1 \\
i_2 \\
\vdots \\
i_n
\end{bmatrix}
$$

In Equation 1, 'w' has a value of $2\pi f_r$ where $f_r$ is a resonant frequency of the SIMO wireless power transmission system 200.

Equation 1 may be transformed into Equation 2.

[Equation 2]

$$\begin{bmatrix} Z_{11}+R_{L1}+\dfrac{1}{jwC_2} & Z_{12} & \cdots & Z_{1(n-1)} \\ \vdots & \vdots & \ddots & \vdots \\ Z_{(n-1)1} & Z_{(n-1)2} & \cdots & Z_{(n-1)(n-1)}+R_{L(n-1)}+\dfrac{1}{jwC_{n-1}} \end{bmatrix}^{-1} \begin{bmatrix} -Z_{1n} \\ -Z_{2n} \\ \vdots \\ -Z_{(n-1)n} \end{bmatrix} = \begin{bmatrix} i_1/i_n \\ i_2/i_n \\ \vdots \\ i_{n-1}/i_n \end{bmatrix}$$

The input impedance $Z_{in}$ and the individual efficiency $\eta_i$ of each power reception circuit 207-i where i=1, 2, ..., or (n-1) from Equation 2 may be represented as Equation 3 and Equation 4, respectively.

[Equation 3]

$$Z_{in} = \frac{v_s}{i_n} = Z_{n1}\frac{i_1}{i_n} + Z_{n2}\frac{i_2}{i_n} + \cdots + Z_{n(n-1)}\frac{i_{n-1}}{i_n} + Z_{nn}$$

[Equation 4]

$$\eta_i\Big|_{i=1\sim(n-1)} = \frac{P_i}{p_{in}} = \frac{\frac{1}{2}R_{Li}|i_i|^2}{\frac{1}{2}Re(v_s\,i_n^*)} = \frac{R_{Li}}{Re(Z_{in})}\left|\frac{i_i}{i_n}\right|^2$$

The total efficiency $\eta_{total}$ may be expressed as the sum of the individual efficiencies of Equation 4, as described in Equation 5.

[Equation 5]

$$\eta_{total} = \eta_1 + \eta_2 + \cdots + \eta_{n-1}$$

A regulation circuit (e.g., the regulation circuit 157 of FIG. 1 (e.g., a DC/DC converter)) may be disposed at the rear end (e.g., output end) of the rectification circuit (e.g., the rectification circuit 155) of each power reception circuit 207-i, to supply a constant voltage required for a hardware component (or an external electronic device) connected to the power reception circuit 207-i. For the regulation circuit 157 (e.g., a DC/DC converter) to supply the constant voltage required for the hardware component (or, the external electronic device), it is required that a voltage input to the regulation circuit 157 (e.g., the DC/DC converter) of each power reception circuit 207-i (e.g., an output voltage of the rectification circuit 155) be within a certain range. Further, since an output voltage of the rectification circuit 155 is stepped down from the input voltage of the rectification circuit 155 by a certain level, it is required that the input voltage (e.g., $V_1, V_2, ..., or\ V_{n-1}$) of the rectification circuit 155 of each power reception circuit 207-i be within a certain range. The input voltage (e.g., $V_1, V_2, ..., or\ V_{n-1}$) of the rectification circuit 155 of each power reception circuit 207-i may be expressed as Equation 6.

[Equation 6]

$$|v|_{i=1\sim(n-1)} = R_{Li}|i_i| = R_{Li}\left|\frac{i_i}{i_n}\right|i_s$$

As described above, in the SIMO wireless power transmission system 200, it is necessary to consider not only the overall efficiency of the power reception circuits, but also whether the individual efficiency of each power reception circuit is equal (e.g., the deviations of the individual efficiencies of the power reception circuits are small), and the load voltage $V_1, V_2, ..., or\ V_{n-1}$ of each power reception circuit needs to be constant.

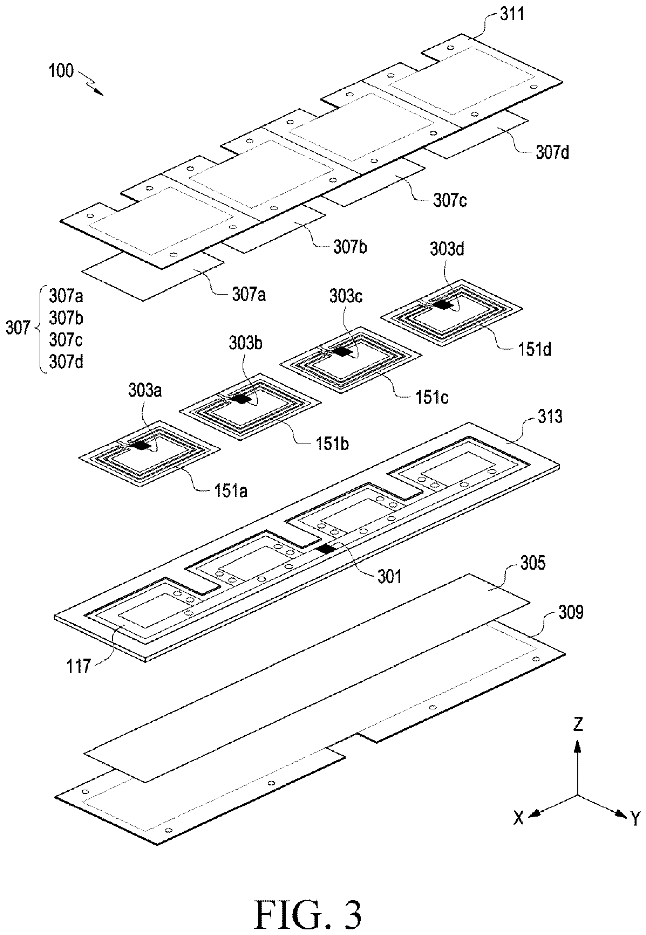

FIG. 3 is an exploded perspective view illustrating an example of the electronic device 100 according to an embodiment in accordance with the appended claims.

According to an embodiment in accordance with the appended claims, the electronic device 100 may include the transmission coil 117 and a plurality of reception coils (e.g., reception coils 151 of FIG. 1). For example, the electronic device 100 may include one transmission coil 117 and four reception coils 151a, 151b, 151c, and 151d as illustrated. However, the electronic device 100 may also be implemented to include three or fewer, or five or more reception coils. Alternatively, the electronic device 100 may be implemented to include two or more transmission coils 117 connected to each other, which will be described in more detail with reference to the following drawings.

According to an embodiment in accordance with the appended claims, the number of turns of the transmission coil 117 (or two or more transmission coils connected to each other) may be equal to or greater than 1. According to an embodiment, the number of turns of each reception coil 151a, 151b, 151c, or 151d (or two or more reception coils disposed on different surfaces and connected to each other) may be equal to or greater than 1.

According to an embodiment in accordance with the appended claims, the transmission coil 117 and the plurality of reception coils 151 may be arranged in alignment with each other. For example, referring to FIG. 3, when viewed from one direction (e.g., a Z-axis direction), inner regions defined by (e.g., surrounded by) the transmission coil 117 may at least partially overlap with an inner region defined by (e.g., surrounded by) a first reception coil 151a, an inner region defined by a second reception coil 151b, an inner region defined by a third reception coil 151c, and an inner region defined by a fourth reception coil 151d. When viewed from one direction (e.g., the Z-axis direction), regions greater than or equal to a specified ratio of the inner regions defined by the transmission coil 117 may overlap with the inner regions of the first reception coil 151a, the second reception coil 151b, the third reception coil 151c, and the fourth reception coil 151d. More specifically, the transmission coil 117 may be implemented to have a similar shape to the inner regions of the first reception coil 151a, the second reception coil 151b, the third reception coil 151c, and the fourth reception coil 151d, when viewed from one direction (e.g., the Z-axis direction), and the inner regions of the transmission coil 117 may at least partially overlap with the inner regions of the first reception coil 151a, the second reception coil 151b, the third reception coil 151c, and the fourth reception coil 151d, respectively, at corresponding positions (e.g., positions where the shapes of the transmission coil 117 and the reception coils 151a, 151b, 151c, and 151d are similar to each other). As illustrated, the areas (or sizes) of the inner regions of the transmission coil 117 may be equal to the areas (or sizes) of the inner regions of the first reception coil 151a, the second reception coil 151b, the third reception coil 151c, and the fourth reception coil 151d. However, the inner regions of the transmission coil 117 may also be implemented to be larger or smaller than the inner regions of the first reception coil 151a, the second reception coil 151b, the third reception coil 151c, and the fourth reception coil 151d.

According to an embodiment in accordance with the appended claims, the transmission coil 117 may be connected to at least one capacitor. For example, referring to FIG. 3, the transmission coil 117 may be connected to a capacitor 301, and the transmission coil 117 and the capacitor 301 may form a transmission resonator. According to an embodiment, the capacitor 301 may be implemented in the form of a slit formed by a segmented portion of the transmission coil 117. However, the capacitor 301 may be implemented as a separate capacitor connected to a portion of the transmission coil 117, rather than a portion of the transmission coil 117. According to an embodiment, the transmission coil 117 may include at least one input port connected to the power generation circuit 113 and/or the matching circuit 115 of the power transmission circuit 110 of FIG. 1, and a position where the at least one input port is disposed is not limited. For example, when the capacitor 301 is implemented in the form of a slit, both ends of the slit may be used as input ports connected to the power generation circuit 113 and/or the matching circuit 115.

According to an embodiment in accordance with the appended claims, the reception coils 151a, 151b, 151c, and 151d may be included in power reception circuits (e.g., the power reception circuits 150-1, 150-2, ..., 151-n of FIG. 2A), respectively. For example, the first reception coil 151a may be included in a first power reception circuit, the second reception coil 151b may be included in a second power reception circuit, the third reception coil 151c may be included in a third power reception circuit, and the fourth reception coil 151d may be included in a fourth power reception circuit. According to an embodiment, the reception coils 151a, 151b, 151c, and 151d may be used to supply power to hardware components of the electronic device 100 connected to the power reception circuits or to an external electronic device. For example, the first power reception circuit including the first reception coil 151a may supply power to a first load, the second power reception circuit including the second reception coil 151b may supply power to a second load, the third power reception circuit including the third reception coil 151c may supply power to a third load, and the fourth power reception circuit including the fourth reception coil 151d may supply power to a fourth load.

According to an embodiment in accordance with the appended claims, each reception coil 151a, 151b, 151c, or 151d may be connected to at least one capacitor. For example, referring to FIG. 3, the first reception coil 151a may be connected to a capacitor 303a, the second reception coil 151b may be connected to a capacitor 303b, the third reception coil 151c may be connected to a capacitor 303c, and the fourth reception coil 151d may be connected to a capacitor 303d. The first reception coil 151a and the capacitor 303a may form a first reception resonator, the second reception coil 151b and the capacitor 303b may form a second reception resonator, the third reception coil 151c and the capacitor 303c may form a third reception resonator, and the fourth reception coil 151d and the capacitor 303d may form a fourth reception resonator. According to an embodiment, the capacitors 303a, 303b, 303c, and 303d may be implemented in the form of slits formed by segmented portions of the respective reception coils 151a, 151b, 151c, and 151d. However, the capacitors 303a, 303b, 303c, and 303d may be implemented as separate capacitors connected to portions of the respective reception coils 151a, 151b, 151c, and 151d, rather than portions of the reception coils 151a, 151b, 151c, and 151d. According to an embodiment, each of the reception coils 151a, 151b, 151c, and 151d may include at least one output port connected to a matching circuit (e.g., the matching circuit 153 of FIG. 1) and/or a rectification circuit (e.g., the rectification circuit 155 of FIG. 1) of the power reception circuit (e.g., the power reception circuit 150 of FIG. 1), and a position where the at least one output port is disposed is not limited to the example described. For example, when the capacitors 303a, 303b, 303c, and 303d are implemented in the form of slits, both ends of each slit may be used as output ports connected to the matching circuit 153 and/or the rectification circuit 155 of the power reception circuit 150.

According to an embodiment in accordance with the appended claims, the electronic device 100 may further include a ferrite 305 disposed outside of the transmission coil 117 and/or a ferrite 307 disposed outside of the reception coils 151a, 151b, 151c, and 151d. For example, referring to FIG. 3, the ferrite 305 may be disposed under the transmission coil 117 (e.g., **in** a -Z direction). The ferrite 307 may be disposed on the reception coils 151a, 151b, 151c, and 151d (e.g., in a +Z direction). According to an embodiment, the ferrite 307 may include individual ferrites 307a, 307b, 307c, and 307d disposed for the respective reception coils 151a, 151b, 151c, and 151d. According to an embodiment, the ferrites 305 and 307 may reduce the effects of a magnetic field (e.g., block a leakage magnetic field) generated by the transmission coil 117 on other components (e.g., circuit elements) of the electronic device 100 to increase the efficiency of wireless power transmission. For example, the ferrites 305 and 307 may be implemented to block a leakage magnetic field at a specified frequency.

According to an embodiment in accordance with the appended claims, the electronic device 100 may further include a lower housing 309 and an upper housing 311 in which the above-described components of the electronic device 100 are mounted. According to an embodiment, the lower housing 309 and the upper housing 311 may be formed of an aluminum material. However, the materials of the lower housing 309 and the upper housing 311 but are not limited. According to an embodiment, the lower housing 309 and the upper housing 311 may be implemented to be combined into a single housing.

According to an embodiment in accordance with the appended claims, the electronic device 100 may further include a frame 313. According to an embodiment, the frame 313 may reduce the effects of a magnetic field (e.g., block a leakage magnetic field) generated by the transmission coil 117 on other components (e.g., circuit elements) of the electronic device 100.

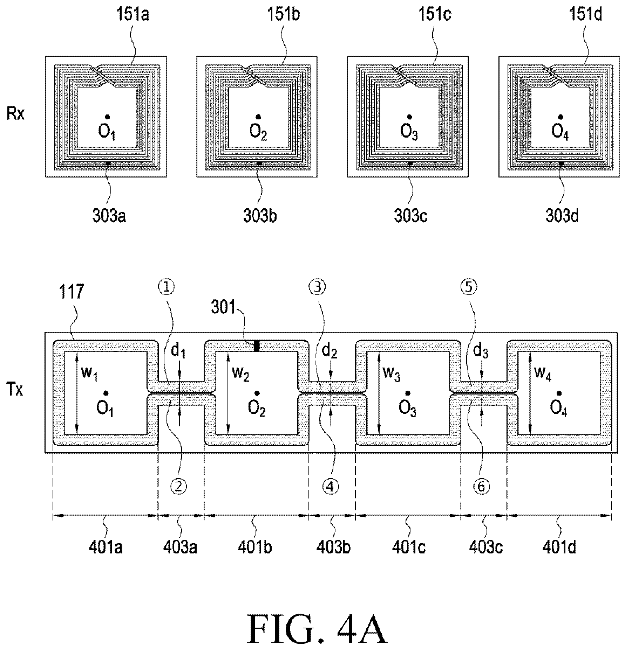

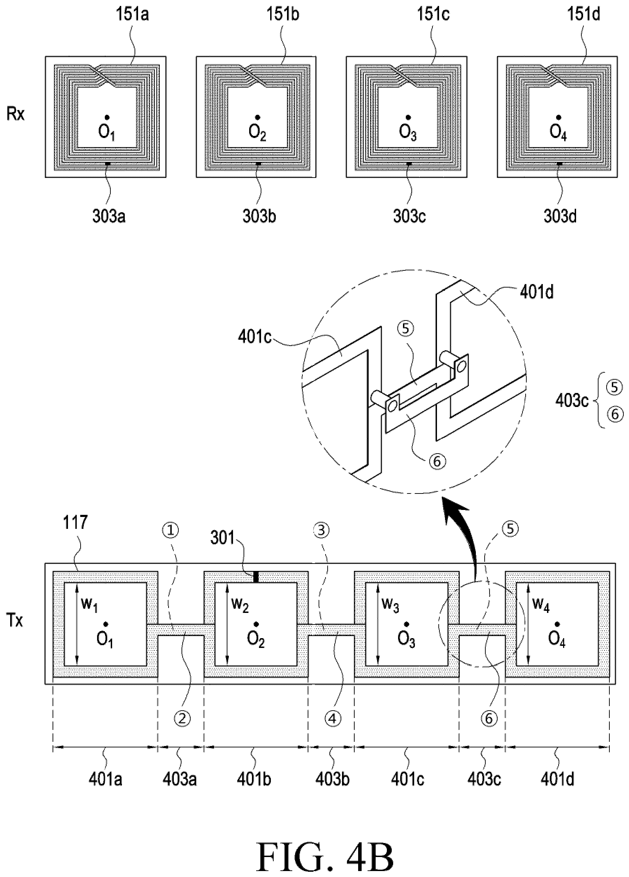

FIG. 4A is a diagram illustrating one example of the shapes and arrangement of the transmission coil 117 and the reception coils 151a, 151b, 151c, and 151d according to an embodiment. FIG. 4B is a diagram illustrating another example of the shapes and arrangement of the transmission coil 117 and the reception coils 151a, 151b, 151c, and 151d according to an embodiment.

According to an embodiment in accordance with the appended claims, the transmission coil 117 may be connected to the capacitor 301 to form a transmission resonator. According to an embodiment, the reception coils 151a, 151b, 151c, and 151d may be connected to the capacitors 303a, 303b, 303c, and 303d, respectively, to respectively form reception resonators.

According to an embodiment in accordance with the appended claims, the transmission coil 117 may include at least one input port connected to the power generation circuit 113 and/or the matching circuit 115 of the power transmission circuit 110 in FIG. 1, and a position where the at least one input port is disposed is not limited. According to an embodiment, each of the reception coils 151a, 151b, 151c, and 151d may include at least one output port connected to a matching circuit (e.g., the matching circuit 153 of FIG. 1) and/or a rectification circuit (e.g., the rectification circuit 155 of FIG. 1) of a power reception circuit (e.g., the power reception circuit 150 of FIG. 1), and a position where the at least one output port is disposed is not limited to the example described.

According to an embodiment in accordance with the appended claims, the transmission coil 117 and the reception coils 151a, 151b, 151c, and 151d may have similar shapes to each other and be arranged in alignment with each other at corresponding positions (e.g., positions where the shapes of the transmission coil 117 and the reception coils 151a, 151b, 151c, and 151d are similar to each other). For example, the transmission coil 117 may include conductors 401a, 401b, 401c, and 401d having similar shapes to the reception coils 151a, 151b, 151c, and 151d. The conductor 401a of the transmission coil 117 may be disposed such that its center $O_1$ coincides with the center $O_1$ of the first reception coil 151a. The conductor 401b of the transmission coil 117 may be disposed such that its center $O_2$ coincides with the center $O_2$ of the second reception coil 151b. The conductor 401c of the transmission coil 117 may be disposed such that its center $O_3$ coincides with the center $O_3$ of the third reception coil 151c. The conductor 401d of the transmission coil 117 may be disposed such that its center $O_4$ coincides with the center $O_4$ of the fourth reception coil 151d.

According to an embodiment in accordance with the appended claims, the conductors 401a, 401b, 401c, and 401d may be connected to each other to form the single transmission coil 117. According to various embodiments in accordance with the appended claims, the conductors 401a, 401b, 401c, and 401d may be called loop-coils. According to an embodiment in accordance with the appended claims, connection portions 403a, 403b, and 403c each connecting adjacent conductors may be formed of the same material as the conductors 401a, 401b, 401c, and 401d. According to an embodiment, widths $d_1$, $d_2$, and $d_3$ of the connection portions 403a, 403b, and 403c each connecting adjacent conductors may be implemented to be less than widths $w_1$, $w_2$, $w_3$, and $w_4$ of the respective conductors 401a, 401b, 401c, and 401d, when viewed from a front direction (e.g., the Z-axis direction in FIG. 3). According to an embodiment in accordance with the appended claims, each of the connection portions 403a, 403b, and 403c may connect adjacent conductors in two connection paths. Currents in opposite directions may flow through the two connection paths of each connection portion 403a, 403b, or 403c, and induced magnetic fields generated from the connection portions 403a, 403b, and 403c may cancel each other at points outside of the transmission coil 117 and the reception coils 151a, 151b, 151c, and 151d to reduce the effects of a leakage magnetic field on other components (e.g., circuit elements) disposed outside of the transmission coil 117 and the reception coils 151a, 151b, 151c, and 151d.

Referring to FIG. 4A, the two connection paths of each connection portion 403a, 403b, or 403c may be disposed on the same surface. For example, a first part ① and a second part ② of the first connection portion 403a may be disposed on the same surface. A first part ③ and a second part ④ of the second connection portion 403b may be disposed on the same surface. A first part ⑤ and a second part ⑥ of the third connection portion 403c may be disposed on the same surface. According to an embodiment, the connection portions 403a, 403b, and 403c may be disposed on the same surface as the conductors 401a, 401b, 401c, and 401d. For example, the conductors 401a, 401b, 401c, and 401d and the connection portions 403a, 403b, and 403c may be disposed on the same surface of a printed circuit board (PCB).

Referring to FIG. 4B, the two connection paths of each connection portion 403a, 403b, or 403c may be disposed on different surfaces. For example, the first part ① of the first connection portion 403a may be disposed on a first surface, and the second part ② thereof may be disposed on a second surface different from the first surface. The first part ③ of the second connection portion 403b may be disposed on the first surface, and the second part ④ thereof may be disposed on the second surface. The first part ⑤ of the third connection portion 403c may be disposed on the first surface and the second part ⑥ thereof may be disposed on the second surface. According to an embodiment in accordance with the appended claims, the first parts ①, ③, and ⑤ may be disposed on the same surface as the conductors 401a, 401b, 401c, and 401d, and the second parts ②, ④, and ⑥ may be disposed on a different surface from the conductors. For example, the conductors 401a, 401b, 401c, and 401d may be disposed on a first surface of a PCB, the first parts ①, ③, and ⑤ may be disposed on the first surface, and the second parts ②, ④, and ⑥ may be disposed in a space spaced from the first surface or on a second surface (e.g., a surface opposite to the first surface). According to an embodiment in accordance with the appended claims, the first parts ①, ③, and ⑤ and the second parts ②, ④, and ⑥ may be arranged to overlap with each other, when viewed from the frontal direction (e.g., the Z-axis direction in FIG. 3). For example, referring further to the spacings $d_1$, $d_2$, and $d_3$ when viewed from the frontal direction (e.g., the Z-axis direction of FIG. 3), described with reference to FIG. 4A, the first parts ①, ③, and ⑤ and the second parts ②, ④, and ⑥ may be arranged to overlap with each other, with the spacings $d_1$, $d_2$, and $d_3$ of substantially zero when viewed from the frontal direction (e.g., the Z-axis direction in FIG. 3). Compared to the connection structure of FIG. 4A, since the portions each connecting adjacent conductors overlap with each other in different layers, the effects of a leakage magnetic field may be reduced more effectively than in the connection structure of FIG. 4A.

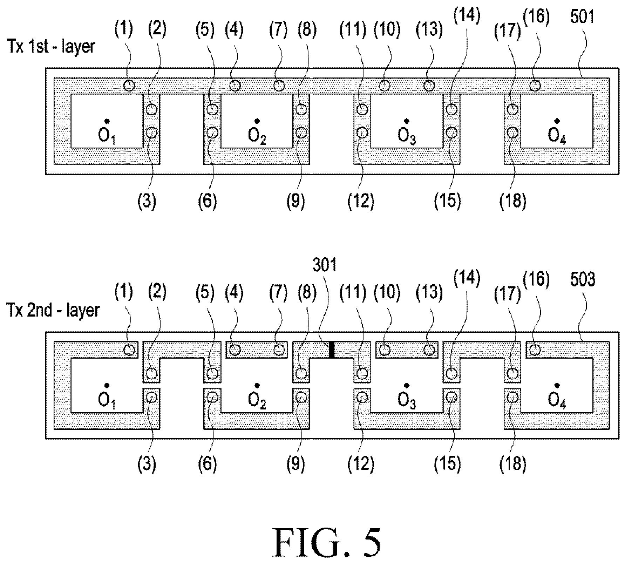

FIG. 5 is a diagram illustrating a case in which a transmission coil (e.g., the transmission coil 117 of FIG. 1) of an electronic device (e.g., the electronic device 100 of FIG. 1) includes transmission coils connected in parallel to each other according to an embodiment in accordance with the appended claims.

According to an embodiment in accordance with the appended claims, the electronic device 100 may include a first transmission coil 501 and a second transmission coil 503. According to an embodiment in accordance with the appended claims, each transmission coil 501 or 503 may be implemented such that conductors are connected to each other, and an inner region of each conductor may at least partially overlap with an inner region of a reception coil (e.g., the reception coil 151 of FIG. 1) disposed on the transmission coils 501 and 503, when viewed from the frontal direction (e.g., the Z-axis direction of FIG. 3). According to an embodiment in accordance with the appended claims, the first transmission coil 501 and the second transmission coil 503 may be connected to form the single transmission coil 117. According to an embodiment in accordance with the appended claims, a capacitor may be connected to at least one of the first transmission coil 501 or the second transmission coil 503. For example, as illustrated, the capacitor 301 may be connected to the second transmission coil 503, and thus the first transmission coil 501, the second transmission coil 503, and the capacitor 301 may form a transmission resonator.

According to an embodiment in accordance with the appended claims, the first transmission coil 501 and the second transmission coil 503 may be disposed on different surfaces. For example, the first transmission coil 501 may be disposed on a first surface ("Tx 1st-layer") and the second transmission coil 503 may be disposed on a second surface ("Tx 2nd-layer"). For example, the first transmission coil 501 may be disposed on a first surface of a PCB, and the second transmission coil 503 may be disposed on a second surface (e.g., the opposite surface of the first surface) of the PCB. In another example, the first transmission coil 501 may be disposed on a first PCB, and the second transmission coil 503 may be disposed on a second PCB different from the first PCB. According to an embodiment, the first transmission coil 501 and the second transmission coil 503 may have similar shapes and be arranged in alignment with each other at corresponding positions (e.g., positions where the shapes of the first transmission coil 501 and the second transmission coil 503 are similar to each other). For example, the first transmission coil 501 and the second transmission coil 503 may be arranged such that their centers $O_1$, $O_2$, $O_3$, and $O_4$ coincide.

According to an embodiment in accordance with the appended claims, the first transmission coil 501 and the second transmission coil 503 may be connected in parallel to each other. For example, the first transmission coil 501 and the second transmission coil 503 may be disposed on the first and second surfaces of the PCB, respectively, and connected in parallel to each other through vias penetrating the PCB. Referring to FIG. 5, portions denoted by reference numerals (1) to (18) in the first transmission coil 501 and portions denoted by the same reference numerals in the second transmission coil 501 may be connected to each other through vias located in the portions denoted by reference numerals (1) to (18).

According to an embodiment in accordance with the appended claims, when the electronic device 100 transmits wireless power through the first transmission coil 501 and the second transmission coil 503 connected in parallel to each other, wireless power transmission efficiency may be increased, compared to when wireless power is transmitted through either the first transmission coil 501 or the second transmission coil 503 (e.g., through a transmission coil with conductors disposed in a single layer, as illustrated in FIG. 4A or FIG. 4B). For example, when the transmission coil 117 includes the first transmission coil 501 and the second transmission coil 503 connected in parallel to each other, the resistance of the transmission resonator may be less than when the transmission coil 117 has conductors disposed in a single layer. Because the resistance of the transmission resonator is reduced due to the afore-mentioned parallel connection, wireless power transmission efficiency may be increased.

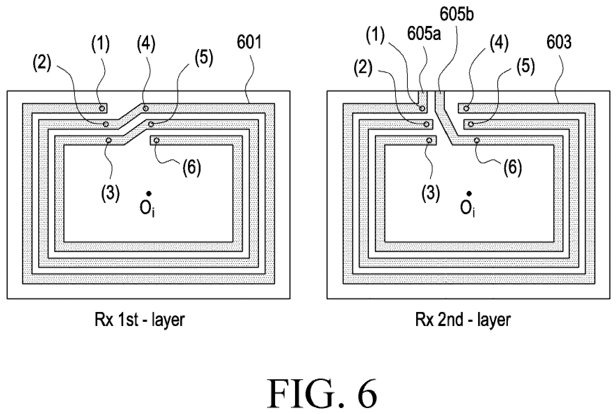

FIG. 6 is a diagram illustrating a case in which each reception coil (e.g., the reception coil 151 of FIG. 1, or the reception coil 151a, 151b, 151c, or 151d of FIG. 3) of an electronic device (e.g., the electronic device 100 of FIG. 1) includes reception coils connected in parallel to each other according to an embodiment.

According to an embodiment in accordance with the appended claims, the electronic device 100 may include a first reception coil 601 and a second reception coil 603. According to an embodiment, each reception coil 601 or 603 may be implemented such that conductors are connected to each other. According to an embodiment, at least one of the first reception coil 601 or the second reception coil 603 may include at least one output port connected to a matching circuit (e.g., the matching circuit 153 of FIG. 1) and/or a rectification circuit (e.g., the rectification circuit 155). For example, as illustrated, a first output port 605a and a second output port 605b of the second reception coil 603 may connect the second reception coil 603 to the matching circuit 153 and/or the rectification circuit 155.

According to an embodiment in accordance with the appended claims, the first reception coil 601 and the second reception coil 603 may be disposed on different surfaces. For example, the first reception coil 601 may be disposed on a first surface ("Rx 1st-layer") and the second reception coil 603 may be disposed on a second surface ("Rx 2nd-layer"). For example, the first reception coil 601 may be disposed on a first surface of a PCB, and the second reception coil 603 may be disposed on a second surface (e.g., the opposite surface of the first surface) of the PCB. In another example, the first reception coil 601 may be disposed on a first PCB, and the second reception coil 603 may be disposed on a second PCB different from the first PCB. According to an embodiment, the first reception coil 601 and the second reception coil 603 may have similar shapes to each other (e.g., the shape of an inner region defined by the first reception coil 601 may be similar to the shape of an inner region defined by the second reception coil 603).

According to an embodiment in accordance with the appended claims, the first reception coil 601 and the second reception coil 603 may be connected in parallel to each other. For example, the first reception coil 601 and the second reception coil 603 may be disposed on the first and second surfaces of the PCB, respectively, and connected in parallel to each other through vias penetrating the PCB. Referring to FIG. 6, portions of the first reception coil 601 denoted by reference numerals (1) to (5) and portions of the second reception coil 603 denoted by the same reference numerals may be connected through vias located in the portions denoted by reference numerals (1) to (5). According to an embodiment, the first reception coil 601 and the second reception coil 603 may be connected to form the single reception coil 151. While not shown, a capacitor (e.g., the capacitor 303a, 303b, 303c, or 303d of FIG. 3) may be connected to at least one of the first reception coil 601 or the second reception coil 603. When a capacitor is connected to at least one of the first reception coil 601 or the second reception coil 603, the first reception coil 601, the second reception coil 603, and the capacitor may form a reception resonator.

According to an embodiment in accordance with the appended claims, when the electronic device 100 transmits wireless power to the first reception coil 601 and the second reception coil 603 connected in parallel to each other, wireless power transmission efficiency may be increased, compared to when wireless power is transmitted to either the first reception coil 601 or the second reception coil 603 (e.g., when each reception coil 151a, 151b, 151c, or 151d is disposed in a single layer as illustrated in FIG. 4A or FIG. 4B). For example, when each reception coil (e.g., the reception coil 151 of FIG. 1, or the reception coil 151a, 151b, 151c, or 151d of FIG. 3) includes the first reception coil 601 and the second reception coil 603 connected in parallel to each other, the resistance of the reception resonator may be less than when each reception coil (e.g., the reception coil 151 of FIG. 1 or the reception coil 151a, 151b, 151c, or 151d of FIG. 3) includes reception coils disposed in a single layer. Because the resistance of the reception resonator is reduced due to the afore-mentioned parallel connection, wireless power transmission efficiency may be increased.

According to an embodiment in accordance with the appended claims, the first reception coil 601 and the second reception coil 603 may be arranged in alignment with each other at corresponding positions (e.g., positions where the shapes of the first reception coil 601 and the second reception coil 603 are similar to each other). For example, the first reception coil 601 and the second reception coil 603 may be disposed such that their centers $O_i$ coincide. According to an embodiment, inner regions of the first reception coil 601 and the second reception coil 603 may overlap with at least some of the inner regions of at least one transmission coil (e.g., the transmission coil 117), when viewed from the frontal direction (e.g., the Z-axis direction in FIG. 3). For example, referring to FIG. 4A or FIG. 4B, the first reception coil 601 and the second reception coil 603 may be arranged such that, when viewed from the frontal direction (e.g., the Z-axis direction in FIG. 3), the center $O_i$ coincides with any one of the centers (e.g., $O_1$, $O_2$, $O_3$, and $O_4$) of FIG. 4A or FIG. 4B. In this case, the combination of the first reception coil 601 and the second reception coil 603 may be described as at least one of the first reception coil 151a, the second reception coil 151b, the third reception coil 151c, or the fourth reception coil 151d of FIG. 4A or FIG. 4B.

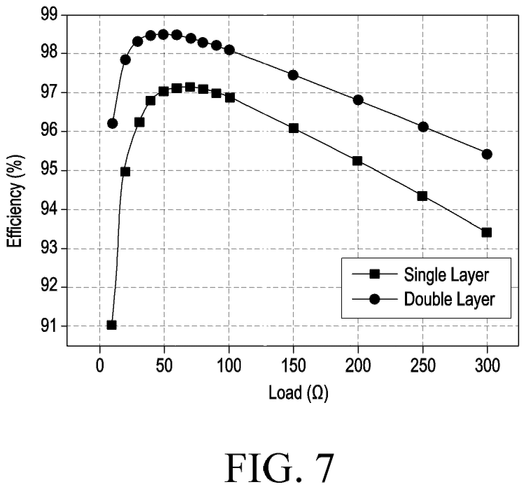

FIG. 7 is a graph illustrating simulation results referred to for describing wireless power transmission efficiency according to an embodiment in accordance with the appended claims.

A curve "Single Layer" in FIG. 7 illustrates wireless power transmission efficiency, for example, when the transmission coil 117 is disposed in a single layer (e.g., the conductors of the transmission coil 117 are disposed on the same surface), and/or the reception coil 151a, 151b, 151c, or 151d is disposed in a single layer (e.g., the conductor of the reception coil is disposed on the same surface), as illustrated in FIG. 4A or 4B. A curve "Double Layer" in FIG. 7 illustrates wireless power transmission efficiency, for example, when the transmission coil 117 is disposed in a plurality of layers (e.g., the conductors of the first transmission coil 501 and the second transmission coil 503 are disposed on two surfaces), and/or the reception coil 151 is disposed in a plurality of layers (e.g., the conductors of the first reception coil 601 and the second reception coil 603 are disposed on two surfaces), as in FIG. 5 and/or FIG. 6. In FIG. 7, load resistance represents the resistance value of the load $RL_1$, $RL_2$, ..., or $RL_{n-1}$ of the receiving end (e.g., the power reception circuit 150-1, 150-2, ..., or 150-(n-1)) of FIG. 2B.

Referring to the curve "Single Layer", it may be noted that the wireless power transmission efficiency is maximized at a load resistance value of about $50\Omega$, and gradually decreases when the load resistance value is above or below about $50\Omega$. When the magnitude of current (e.g., $I_n$ in FIG. 2B) of the power transmission circuit 110 is fixed, as the load resistance value increases above about $50\Omega$, a current (e.g., $I_1$, $I_2$, ..., or $I_{n-1}$ in FIG. 2B) output from a reception resonator (e.g., the reception coil 151 of FIG. 1) decreases, which reduces the power loss of the reception resonator (e.g., the reception coil 151). However, the magnitude of power transferred to the load of the receiving end also decreases, leading to a decrease in the wireless power transmission efficiency. When the magnitude of the current $I_n$ of the power transmission circuit 110 is fixed, as the load resistance value decreases below about $50\Omega$, the current (e.g., $I_1$, $I_2$, ..., or $I_{n-1}$) output from the reception resonator (e.g., the reception coil 151) increases, which increases the magnitude of power transferred to the load of the receiving end. However, the power loss of the reception resonator (e.g., the reception coil 151) increases, leading to a decrease in the wireless power transmission efficiency.

Referring to the curve "Double Layer", it may be noted that, similarly to the "Single Layer" curve, the load resistance value is maximized at about $50\Omega$ and gradually decreases above or below about $50\Omega$. Referring to the curves "Single Layer" and "Double Layer" together, it may be noted that the curve "Double Layer" shows higher wireless power transmission efficiency. This indicates that the wireless power transmission efficiency is higher in the "Double Layer" case in which transmission coils are disposed in different layers and connected in parallel to each other, and/or reception coils are disposed in different layers and connected in parallel to each other, than in the "Single Layer" case in which transmission coils are disposed in the same layer, and/or reception coils are disposed in the same layer, because the resistance of the transmission resonator and/or the reception resonator is smaller.

According to an embodiment in accordance with the appended claims, the number of turns ("Tx Turn Number") of the transmission coil 117 (or the first transmission coil 501 and the second transmission coil 503) and the number of turns ("Rx Turn Number") of the reception coil 151 (or the first reception coil 601 and the second reception coil 603) may be determined based on at least one of the distance ("Tx/Rx Distance") between the transmission coil and the reception coil, the size ("Rx Size") of the reception coil (e.g., the area of the inner region defined by the reception coil), or a voltage range ("Load Voltage") (e.g., $V_1$, $V_2$, ...., or $V_{n-1}$) to be applied to a rectification circuit (e.g., the rectification circuit 155 of FIG. 1).

[Table 1]

| | Tx Turn Number [turns] | Rx Turn Number [turns] | Rx Size[mm] | Tx/Rx Distance[mm] | Load Voltage[V] |
|---|---|---|---|---|---|
| #1 | 1 | 3 | 50X70 | 4 | 33.1 ~ 34.1 |
| #2 | 2 | 2 | 50X70 | 4 | 58 ~ 61.3 |
| #3 | 2 | 2 | 35X45 | 4 | 34.6 ~ 36.3 |

(continued)

|  | Tx Turn Number [turns] | Rx Turn Number [turns] | Rx Size[mm] | Tx/Rx Distance[mm] | Load Voltage[V] |
|---|---|---|---|---|---|
| #4 | 2 | 2 | 50X70 | 7 | 35.6 ~ 37.3 |

Referring to #2 and #4 in Table 1, it may be noted that as the Tx/Rx distance increases, the load voltage decreases, while as the Tx/Rx distance decreases, the load voltage increases. As the number of Tx turns and/or the number of Rx turns increases, mutual inductance between the transmission coil and the reception coil may increase, which increases the load voltage, while as the number of Tx turns and/or the number of Rx turns decreases, the mutual inductance between the transmission coil and the reception coil may decrease, which decreases the load voltage. Referring to #2 and #3, it may be noted that a larger Rx size results in a higher load voltage, and a smaller Rx size results in a lower load voltage. According to an embodiment, the number of Tx turns and the number of Rx turns may be determined to match a voltage range to be applied to the rectification circuit 155 (e.g., a constant voltage required for a hardware component (or an external electronic device) connected to the power reception circuit 150).

For example, when the transmission coil and the reception coil need to be disposed at a large Tx/Rx distance, the number of Tx turns may be determined to be large and the number of Rx turns may be determined to be large. When the transmission coil and the reception coil need to be disposed at a small Tx/Rx distance, the number of Tx turns may be determined to be small and the number of Rx turns may be determined to be small. For example, given a design distance at which the transmission coil and the reception coil are to be disposed, the number of Tx turns and the number of Rx turns may be determined to be small or large depending on the design distance, to match a voltage range to be applied to the rectification circuit 155. Further, a design may be made such that when the Tx/Rx distance is large, a reception coil with a large Rx size is disposed for wireless power transmission, and when the Tx/Rx distance is small, a reception coil with a small Rx size is disposed for wireless power transmission.

For example, when a reception coil with a small Rx size needs to be disposed at a design distance, the number of Tx turns and the number of Rx turns may be determined to be large. When a reception coil with a large Rx size needs to be disposed at a design distance, the number of Tx turns and the number of Rx turns may be determined to be small. For example, given a design size of the reception coil, the number of Tx turns and the number of Rx turns may be determined to be small or large depending on the design size of the reception coil, to match a voltage range to be applied to the rectification circuit 155.

According to an embodiment in accordance with the appended claims, an electronic device may include: a plurality of reception coils; a first transmission coil configured to magnetically coupled to the plurality of reception coils and including a plurality of first conductors connected to each other; and a power generation circuit configured to convert an input direct current into an alternating current and provide the alternating current to the first transmission coil. When viewed from one direction, first inner regions defined by the plurality of first conductors may at least partially overlap with second inner regions defined by the plurality of reception coils, respectively, and when viewed from the one direction, a width between connection portions of the first transmission coil, connecting adjacent first conductors of the plurality of first conductors, may be less than a width of each of the adjacent first conductors, the device further comprising further comprises a second transmission coil including a plurality of second conductors connected to each other, and wherein the second transmission coil is connected in parallel to the first transmission coil.

According to an embodiment in accordance with the appended claims, the adjacent first conductors may be disposed on a first surface of a first printed circuit board (PCB), and the connection portion connecting the adjacent first conductors may be disposed on the first surface.

According to an embodiment in accordance with the appended claims, the adjacent first conductors may be disposed on a first surface of a first printed circuit board (PCB), and a first part of the connection portion connecting the adjacent first conductors may be disposed on a surface of the first printed circuit board (PCB) different from the first surface.

According to an embodiment in accordance with the appended claims, a second part of the connection portions may be disposed on the first surface.

According to an embodiment in accordance with the appended claims, when viewed from the one direction, the first part and the second part may at least partially overlap with each other.

According to an embodiment in accordance with the appended claims, sizes of the first inner regions may be greater than or equal to sizes of the second inner regions, respectively.

According to an embodiment in accordance with the appended claims, when viewed from the one direction, regions greater than or equal to a specified percentage of the first inner regions may overlap with the second inner regions.

According to an embodiment in accordance with the appended claims, the electronic device may further include a plurality of first capacitors and a second capacitor, the capacitors of the plurality of first capacitors may be respectively connected to reception coils of the plurality of reception coils, and the second capacitor may be connected to at least a portion of the first transmission coil.

According to an embodiment in accordance with the appended claims, the second capacitor and the first transmission coil may be included in a transmission resonator.

According to an embodiment in accordance with the appended claims, the first transmission coil may be disposed on a first surface of a first PCB, and the second transmission coil may be disposed on a second surface of the first PCB different from the first surface of the first PCB.

According to an embodiment, the first transmission coil and the second transmission coil may be connected in parallel to each other through at least one via.

According to an embodiment in accordance with the appended claims, a first reception coil and a second reception coil of the plurality of reception coils may be connected in parallel to each other.

According to an embodiment in accordance with the appended claims, the first reception coil may be disposed on a first surface of a second PCB, and the second reception coil may be disposed on a second surface of the second PCB different from the first surface of the second PCB.

According to an embodiment in accordance with the appended claims, the first reception coil and the second reception coil may be connected in parallel to each other through at least one via.

According to an embodiment in accordance with the appended claims, the electronic device may further include a rectification circuit configured to rectify an alternating current provided from the second transmission coil into a direct current.

According to an embodiment in accordance with the appended claims, the number of turns of the first transmission coil and the number of turns of the second transmission coil may be determined based on at least one of a distance between the first transmission coil and the plurality of reception coils, an area of the second inner regions, or a voltage range applied to the rectification circuit.

According to an embodiment in accordance with the appended claims, the electronic device may further include: a first matching circuit connected to the plurality of reception coils and the power generation circuit; and a second matching circuit connected to the first transmission coil and the rectification circuit.

According to an embodiment in accordance with the appended claims, the electronic device may further include a ferrite disposed outside of the first transmission coil and the plurality of reception coils, and configured to shield at least a portion of a magnetic field generated by the first transmission coil.

According to an embodiment in accordance with the appended claims, the plurality of reception coils may be connected to a plurality of hardware components, respectively, and power received from the first transmission coil through the plurality of reception coils may be provided to the plurality of hardware components, respectively.

With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., a program) including one or more instructions that are stored in a storage medium (e.g., internal memory or external memory) that is readable by a machine (e.g., the electronic device 100). For example, a processor (e.g., the control circuit 130) of the machine (e.g., the electronic device 100) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

**Claims**

1.  An electronic device comprising:

    a plurality of reception coils (151);
    a first transmission coil (117, 501) configured to magnetically couple to the plurality of reception coils (151) and including a plurality of first conductors (401) connected to each other; and
    a power generation circuit (113) configured to convert an input direct current into an alternating current and provide the alternating current to the first transmission coil (117, 501),
    a second transmission coil (503) including a plurality of second conductors connected to each other, and
    wherein when viewed from one direction, first inner regions defined by the plurality of first conductors (401) at least partially overlap with second inner regions defined by the plurality of reception coils (151), respectively,
    wherein when viewed from the one direction, a width of a connection portion (403), connecting adjacent first conductors of the plurality of first conductors (401), is less than a width of each of the adjacent first conductors (401), and
    wherein the second transmission coil (503) is connected in parallel to the first transmission coil (117, 501).

2.  The electronic device of claim 1, wherein the adjacent first conductors (401) are disposed on a first surface of a first printed circuit board (PCB), and
    wherein the connection portion (403) connecting the adjacent first conductors is disposed on the first surface.

3.  The electronic device of claim 1, wherein the adjacent first conductors (401) are disposed on a first surface of a first printed circuit board (PCB),

    wherein a first part of the connection portion (403) connecting the adjacent first conductors (401) is disposed on a surface of the first printed circuit board (PCB) different from the first surface, and
    wherein a second part of the connection portion (403) is disposed on the first surface.

4.  The electronic device of claim 3, wherein when viewed from the one direction, the first parts and the second parts at least partially overlap with each other.

5.  The electronic device of claim 1, wherein sizes of the first inner regions are greater than or equal to sizes of the second inner regions, respectively.

6.  The electronic device of claim 1, wherein when viewed from the one direction, regions greater than or equal to a specified percentage of the first inner regions overlap with the second inner regions.

7.  The electronic device of claim 1, further comprising a plurality of first capacitors (303) and a second capacitor (301),

    wherein capacitors of the plurality of first capacitors (303) are respectively connected to reception coils of the plurality of reception coils (151),

wherein the second capacitor (301) is connected to at least a portion of the first transmission coil (117), and

wherein the second capacitor (301) and the first transmission coil (117) are included in a transmission resonator.

8. The electronic device of claim 1, wherein the first transmission coil (501) is disposed on a first surface of a first printed circuit board (PCB),

wherein the second transmission coil (503) is disposed on a second surface of the first PCB different from the first surface of the first PCB, and

wherein the first transmission coil (501) and the second transmission coil (503) are connected in parallel to each other through at least one via.

9. The electronic device of claim 1, wherein a first reception coil (151a) and a second reception coil (151b) of the plurality of reception coils (151) are connected in parallel to each other through at least one via,

wherein the first reception coil (151a) is disposed on a first surface of a second PCB, and

wherein the second reception coil (151b) is disposed on a second surface of the second PCB different from the first surface of the second PCB.

10. The electronic device of claim 1, further comprising a rectification circuit (155) configured to rectify an alternating current provided from the second transmission coil (503) into a direct current.

11. The electronic device of claim 10, wherein the number of turns of the first transmission coil (501) and the number of turns of the second transmission coil (503) are determined based on at least one of a distance between the first transmission coil (501) and the plurality of reception coils (151), an area of the second inner regions, or a voltage range applied to the rectification circuit (155).

12. The electronic device of claim 10, further comprising:

a first matching circuit (153) connected to the plurality of reception coils (151) and the power generation circuit (113); and

a second matching circuit (115) connected to the first transmission coil (117, 501) and the rectification circuit (155).

13. The electronic device of claim 1, further comprising a ferrite (305, 307) disposed outside of the first transmission coil (117) and the plurality of reception coils (151), and configured to shield at least a portion of a magnetic field generated by the first transmission coil (117).

14. The electronic device of claim 1, wherein the plurality of reception coils (151) are connected to a plurality of hardware components, respectively, and

wherein power received from the first transmission coil (117) through the plurality of reception coils (151) is provided to the plurality of hardware components, respectively.

**Patentansprüche**

1. Elektronisches Gerät, umfassend:

eine Vielzahl von Empfangsspulen (151);

eine erste Sendespule (117, 501), die dazu konfiguriert ist, magnetisch an die Vielzahl von Empfangsspulen (151) zu koppeln und eine Vielzahl von ersten Leitern (401) beinhaltet, die miteinander verbunden sind; und

eine Leistungserzeugungsschaltung (113), die dazu konfiguriert ist, einen Eingangsgleichstrom in einen Wechselstrom umzuwandeln und den Wechselstrom an die erste Sendespule (117, 501) bereitzustellen,

eine zweite Sendespule (503), die eine Vielzahl von zweiten Leitern beinhaltet, die miteinander verbunden sind, und

wobei, wenn aus einer Richtung betrachtet, erste innere Regionen, die durch die Vielzahl von ersten Leitern (401) definiert sind, jeweils zweite innere Regionen, die durch die Vielzahl von Empfangsspulen (151) definiert sind, zumindest teilweise überlappen,

wobei, wenn aus der einen Richtung betrachtet, eine Breite eines Verbindungsabschnittes (403), der benachbarte erste Leiter aus der Vielzahl von ersten Leitern (401) verbindet, weniger als eine Breite von jedem der benachbarten ersten Leiter (401) ist, und
wobei die zweite Sendespule (503) parallel zu der ersten Sendespule (117, 501) verbunden ist.

2. Elektronisches Gerät nach Anspruch 1, wobei die benachbarten ersten Leiter (401) auf einer ersten Oberfläche einer ersten Leiterplatte (PCB) angeordnet sind, und
wobei der Verbindungsabschnitt (403), der die benachbarten ersten Leiter verbindet, auf der ersten Oberfläche angeordnet ist.

3. Elektronisches Gerät nach Anspruch 1, wobei die benachbarten ersten Leiter (401) auf einer ersten Oberfläche einer ersten Leiterplatte (PCB) angeordnet sind,

   wobei ein erster Teil des Verbindungsabschnittes (403), der die benachbarten ersten Leiter (401) verbindet, auf einer Oberfläche der ersten Leiterplatte (PCB) angeordnet ist, die sich von der ersten Oberfläche unterscheidet, und
   wobei ein zweiter Teil des Verbindungsabschnittes (403) auf der ersten Oberfläche angeordnet ist.

4. Elektronisches Gerät nach Anspruch 3, wobei, wenn aus der einen Richtung betrachtet, die ersten Teile und die zweiten Teile einander zumindest teilweise überlappen.

5. Elektronisches Gerät nach Anspruch 1, wobei Größen der ersten inneren Regionen jeweils größer als oder gleich Größen der zweiten inneren Regionen sind.

6. Elektronisches Gerät nach Anspruch 1, wobei, wenn aus der einen Richtung betrachtet, Regionen größer als oder gleich einem spezifizierten Prozentsatz der ersten inneren Regionen mit den zweiten inneren Regionen überlappen.

7. Elektronisches Gerät nach Anspruch 1, ferner umfassend eine Vielzahl von ersten Kondensatoren (303) und einen zweiten Kondensator (301),

   wobei Kondensatoren aus der Vielzahl von ersten Kondensatoren (303) jeweils mit Empfangsspulen aus der Vielzahl von Empfangsspulen (151) verbunden sind,
   wobei der zweite Kondensator (301) mit zumindest einem Abschnitt der ersten Sendespule (117) verbunden ist, und wobei der zweite Kondensator (301) und die erste Sendespule (117) in einem Senderesonator enthalten sind.

8. Elektronisches Gerät nach Anspruch 1, wobei die erste Sendespule (501) auf einer ersten Oberfläche einer ersten Leiterplatte (PCB) angeordnet ist,
wobei die zweite Sendespule (503) auf einer zweiten Oberfläche der ersten PCB angeordnet ist, die sich von der ersten Oberfläche der ersten PCB unterscheidet, und wobei die erste Sendespule (501) und die zweite Sendespule (503) durch zumindest eine Durchkontaktierung parallel zueinander verbunden sind.

9. Elektronisches Gerät nach Anspruch 1, wobei eine erste Empfangsspule (151a) und eine zweite Empfangsspule (151b) aus der Vielzahl von Empfangsspulen (151) durch zumindest eine Durchkontaktierung parallel zueinander verbunden sind,

   wobei die erste Empfangsspule (151a) auf einer ersten Oberfläche einer zweiten PCB angeordnet ist, und
   wobei die zweite Empfangsspule (151b) auf einer zweiten Oberfläche der zweiten PCB angeordnet ist, die sich von der ersten Oberfläche der zweiten PCB unterscheidet.

10. Elektronisches Gerät nach Anspruch 1, ferner umfassend eine Gleichrichtungsschaltung (155), die dazu konfiguriert ist, einen Wechselstrom, der von der zweiten Sendespule (503) bereitgestellt ist, in einen Gleichstrom gleichzurichten.

11. Elektronisches Gerät nach Anspruch 10, wobei die Anzahl an Windungen der ersten Sendespule (501) und die Anzahl an Windungen der zweiten Sendespule (503) basierend auf zumindest einem von einem Abstand zwischen der ersten Sendespule (501) und der Vielzahl von Empfangsspulen (151), einem Bereich der zweiten inneren Regionen oder einer Spannungsspanne, die an die Gleichrichtungsschaltung (155) angelegt ist, bestimmt sind.

12. Elektronisches Gerät nach Anspruch 10, ferner umfassend:

eine erste Anpassungsschaltung (153), die mit der Vielzahl von Empfangsspulen (151) und der Leistungserzeugungsschaltung (113) verbunden ist; und

eine zweite Anpassungsschaltung (115), die mit der ersten Sendespule (117, 501) und der Gleichrichtungsschaltung (155) verbunden ist.

13. Elektronisches Gerät nach Anspruch 1, ferner umfassend einen Ferrit (305, 307), der außerhalb der ersten Sendespule (117) und der Vielzahl von Empfangsspulen (151) angeordnet und dazu konfiguriert ist, zumindest einen Abschnitt eines Magnetfeldes, das durch die erste Sendespule (117) erzeugt wird, abzuschirmen.

14. Elektronisches Gerät nach Anspruch 1, wobei die Vielzahl von Empfangsspulen (151) jeweils mit einer Vielzahl von Hardwarekomponenten verbunden ist, und
wobei Leistung, die von der ersten Sendespule (117) durch die Vielzahl von Empfangsspulen (151) empfangen wird, jeweils an die Vielzahl von Hardwarekomponenten bereitgestellt ist.


## Revendications

1. Dispositif électronique comprenant :

une pluralité de bobines de réception (151) ;
une première bobine de transmission (117, 501) conçue pour se coupler magnétiquement à la pluralité de bobines de réception (151) et comprenant une pluralité de premiers conducteurs (401) connectés les uns aux autres ; et
un circuit de génération d'énergie (113) conçu pour convertir un courant continu d'entrée en un courant alternatif et fournir le courant alternatif à la première bobine de transmission (117, 501),
une seconde bobine de transmission (503) comprenant une pluralité de seconds conducteurs connectés les uns aux autres, et
dans lequel, lorsqu'elles sont vues d'une direction, de premières régions internes définies par la pluralité de premiers conducteurs (401) chevauchent au moins partiellement de secondes régions internes définies par la pluralité de bobines de réception (151), respectivement,
dans lequel, lorsqu'elle est vue d'une direction, une largeur d'une partie de connexion (403), connectant des premiers conducteurs adjacents de la pluralité de premiers conducteurs (401), est inférieure à une largeur de chacun des premiers conducteurs adjacents (401), et
dans lequel la seconde bobine de transmission (503) est connectée en parallèle à la première bobine de transmission (117, 501).

2. Dispositif électronique de la revendication 1, dans lequel les premiers conducteurs adjacents (401) sont disposés sur une première surface d'une première carte de circuit imprimé (PCB), et
dans lequel la partie de connexion (403) connectant les premiers conducteurs adjacents est disposée sur la première surface.

3. Dispositif électronique de la revendication 1, dans lequel les premiers conducteurs adjacents (401) sont disposés sur une première surface d'une première carte de circuit imprimé (PCB),

dans lequel une première pièce de la partie de connexion (403) connectant les premiers conducteurs adjacents (401) est disposée sur une surface de la première carte de circuit imprimé (PCB) différente de la première surface, et
dans lequel une seconde pièce de la partie de connexion (403) est disposée sur la première surface.

4. Dispositif électronique de la revendication 3, dans lequel, lorsqu'elles sont vues d'une direction, les premières pièces et les secondes pièces se chevauchent au moins partiellement.

5. Dispositif électronique de la revendication 1, dans lequel des tailles des premières régions internes sont supérieures ou égales à des tailles des secondes régions internes, respectivement.

6. Dispositif électronique de la revendication 1, dans lequel, lorsqu'elles sont vues d'une direction, des régions supérieures ou égales à un pourcentage spécifié des premières régions internes chevauchent les secondes régions internes.

**7.** Dispositif électronique de la revendication 1, comprenant en outre une pluralité de premiers condensateurs (303) et un second condensateur (301),

dans lequel des condensateurs de la pluralité de premiers condensateurs (303) sont respectivement connectés à des bobines de réception de la pluralité de bobines de réception (151),
dans lequel le second condensateur (301) est connecté à au moins une partie de la première bobine de transmission (117), et
dans lequel le second condensateur (301) et la première bobine de transmission (117) sont compris dans un résonateur de transmission.

**8.** Dispositif électronique de la revendication 1, dans lequel la première bobine de transmission (501) est disposée sur une première surface d'une première carte de circuit imprimé (PCB),
dans lequel la seconde bobine de transmission (503) est disposée sur une seconde surface de la première PCB différente de la première surface de la première PCB, et dans lequel la première bobine de transmission (501) et la seconde bobine de transmission (503) sont connectées en parallèle l'une à l'autre au travers d'au moins un trou d'interconnexion.

**9.** Dispositif électronique de la revendication 1, dans lequel une première bobine de réception (151a) et une seconde bobine de réception (151b) de la pluralité de bobines de réception (151) sont connectées en parallèle l'une à l'autre au travers d'au moins un trou d'interconnexion,

dans lequel la première bobine de réception (151a) est disposée sur une première surface d'une seconde PCB, et
dans lequel la seconde bobine de réception (151b) est disposée sur une seconde surface de la seconde PCB différente de la première surface de la seconde PCB.

**10.** Dispositif électronique de la revendication 1, comprenant en outre un circuit de redressement (155) conçu pour redresser un courant alternatif fourni par la seconde bobine de transmission (503) en un courant continu.

**11.** Dispositif électronique de la revendication 10, dans lequel le nombre de tours de la première bobine de transmission (501) et le nombre de tours de la seconde bobine de transmission (503) sont déterminés sur la base d'au moins l'une d'une distance entre la première bobine de transmission (501) et la pluralité de bobines de réception (151), d'une aire des secondes régions internes, ou d'une plage de tension appliquée au circuit de redressement (155).

**12.** Dispositif électronique de la revendication 10, comprenant en outre :

un premier circuit d'adaptation (153) connecté à la pluralité de bobines de réception (151) et au circuit de génération d'énergie (113) ; et
un second circuit d'adaptation (115) connecté à la première bobine de transmission (117, 501) et au circuit de redressement (155).

**13.** Dispositif électronique de la revendication 1, comprenant en outre une ferrite (305, 307) disposée à l'extérieur de la première bobine de transmission (117) et de la pluralité de bobines de réception (151), et conçue pour protéger au moins une partie d'un champ magnétique généré par la première bobine de transmission (117).

**14.** Dispositif électronique de la revendication 1, dans lequel la pluralité de bobines de réception (151) sont connectées à une pluralité de composants matériels, respectivement, et
dans lequel de l'énergie reçue de la première bobine de transmission (117) par l'intermédiaire de la pluralité de bobines de réception (151) est fournie à la pluralité de composants matériels, respectivement.

FIG. 1

FIG. 2A

FIG. 2B

FIG. 3

FIG. 4A

FIG. 4B

FIG. 5

FIG. 6

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20190074135 A1